# EUROPEAN PATENT APPLICATION

(11) **EP 3 045 884 A1**
(43) Date of publication of application: **20.07.2016**
(21) Application number: 16151066.4
(22) Date of filing: 13.01.2016
(51) Int. Cl.: G01K 1/10, G01K 13/02

(54) **TEMPERATURE SENSOR**

(30) Priority: 13.01.2015 JP 2015003867
(71) Applicant: Azbil Corporation, Chiyoda-ku Tokyo 100-6419 (JP)
(72) Inventor: KATO, Atsushi, Tokyo, Tokyo 100-6419 (JP)
(74) Representative: Tischner, Oliver

(57) **Abstract**

The present invention relates to a temperature sensor including a protective pipe 101, a temperature sensing element 102, a wiring 103, and a gas barrier layer 104. The gas barrier layer 104 is disposed between the temperature sensing element 102 and the protective pipe 101 and between the wiring 103 and the protective pipe 101, covers the temperature sensing element 102 and the wiring 103 in the protective pipe 101, and is made of a material having a gas permeability lower than the material of the protective pipe 101.

## Description

### Technical Field

The present invention relates to a temperature sensor having a temperature sensing element protected by a protective pipe.

### Background Art

A temperature sensor including a temperature sensing element such as, for example, a thermocouple or a temperature measurement resistor is used to measure the temperature of a fluid. For example, a temperature sensor is used to measure the fluid temperature in a duct, pipe, or tank. In particular, when the temperature of a fluid to be measured is lower than the outdoor air temperature in such use, occurrence of condensation on the temperature sensing element may prevent the acquisition of accurate temperature data. To prevent this, the temperature sensing element is sealed with a synthetic resin and inserted into a protective pipe (see PTL 1).

In addition, when the temperature of a corrosive solution is measured, the protective pipe is made of a chemical resistant fluororesin such as a tetrafluoroethylene-perfluoroalkoxyethylene copolymer resin (perfluoroalkoxyalkane: PFA) or a tetrafluoroethylene-hexafluoropropylene copolymer resin (perfluoroethylene-propene copolymer: FEP).

### Citation List

### Patent Literature

PTL 1: Japanese Patent No. 3215301

### Non-patent Literature

NPL 1: http://www.soarnol.com/jpn/solution/solution050303.html
NPL 2: DAIKIN INDUSTRIES, Itd. "Neoflon™ film PFA, FEP, ETFE, PCTFE", DAIKIN technical material, GX-27e, 2003

### Summary of Invention

However, since various types of gases are generated depending on the measurement environment and a protective pipe made of a fluororesin cannot completely prevent the permeation of the gases, the gases enter the protective pipe. As a result, the temperature sensing element and the wiring are subject to corrosion by corrosive gas having permeated bit by bit over a long period of time or chemical solutions having re-liquefied, thereby causing a failure. Since a large amount of chemical solution gas is generated particularly in a high temperature process, a failure as described above occurs in a shorter period of time.

Although entrance of gas can be reduced by increasing the thickness of the protective pipe, doubling the thickness only halves the amount of entrance of gas and significant effects cannot be expected. In addition, an increase in the thickness reduces a response of the temperature sensing element to temperature changes and flexibility, thereby making it difficult to install the temperature sensor.

The invention addresses the above problems with an object of providing a temperature sensor that can suppress a failure in a corrosive environment without reduction in a response of the temperature sensor to temperature changes.

A temperature sensor according to the present invention includes a protective pipe having one end provided with a housing section, the protective pipe being made of a fluororesin, a temperature sensing element housed in the housing section of the protective pipe, a wiring connected to the temperature sensing element, the wiring being drawn from the other end of the protective pipe, and a gas barrier layer disposed between the temperature sensing element and the protective pipe and between the wiring and the protective pipe, the gas barrier layer covering the temperature sensing element and the wiring in the protective pipe, in which the gas barrier layer is made of a material having a gas permeability lower than that of a material of the protective pipe.

The temperature sensor may include a resin mold section covering the temperature sensing element, a terminal section of the temperature sensing element, and an electric connection section between the terminal section and the wiring, the resin mold section being made of a fluororesin, in which the gas barrier layer is formed so as to cover the resin mold section. In addition, the temperature sensing element and the wiring are preferably constricted by the gas barrier layer in a tubular shape. In addition, the protective pipe is preferably made of a tetrafluoroethylene-perfluoroalkoxyethylene copolymer resin or a tetrafluoroethylene-hexafluoropropylene copolymer resin and the gas barrier layer is preferably made of polyvinylidene fluoride.

As described above, the temperature sensor according to the invention has the gas barrier layer, disposed between the temperature sensing element and the protective pipe and between the wiring and the protective pipe, that covers the temperature sensing element and the wiring in the protective pipe, so the temperature sensor has an excellent effect of suppressing a failure in a corrosive environment without reduction in a response of the temperature sensor to temperature changes.

### Brief Description of Drawings

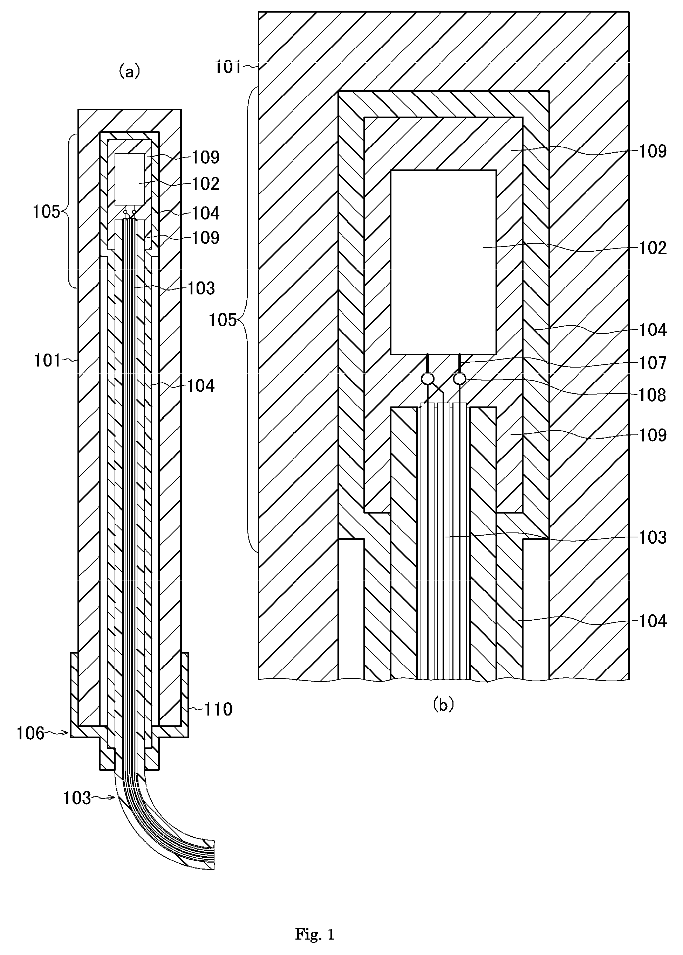

Fig. 1 is a cross sectional view illustrating the structure of a temperature sensor according to an embodiment of the present invention.

### Description of Embodiments

An embodiment of the present invention will be described below with reference to the drawings. Fig. 1 is a cross sectional view illustrating the structure of a temperature sensor according to an embodiment of the invention. Fig. 1 (a) illustrates the entire structure and Fig. 1 (b) enlarges a part of the structure. This temperature sensor includes a protective pipe 101, a temperature sensing element 102, a wiring 103, and a gas barrier layer 104.

The protective pipe 101 is made of a fluororesin and has a housing section 105 at its one end. The temperature sensing element 102 is housed in the housing section 105 of the protective pipe 101. The temperature sensing element 102 includes, for example, a temperature measurement resistor, a thermocouple, or the like. The wiring 103 is connected to the temperature sensing element 102 and drawn from the other end 106 of the protective pipe 101. The gas barrier layer 104 is disposed between the temperature sensing element 102 and the protective pipe 101 and between the wiring 103 and the protective pipe 101 and covers the temperature sensing element 102 and the wiring 103 in the protective pipe 101. It is important that the gas barrier layer 104 is made of a material having a gas permeability lower than that of the material of the protective pipe 101.

The temperature sensor further includes a resin mold section 109, made of a fluororesin, that covers the temperature sensing element 102, terminal sections 107 of the temperature sensing element 102, an electric connection section 108 between the terminal sections 107 and the wiring. The gas barrier layer 104 is formed so as to cover the resin mold section 109. In addition, the temperature sensing element 102 and the wiring 103 are constricted by the gas barrier layer 104 formed in a tubular shape. Since the embodiment is provided with the resin mold section 109, the part of the temperature sensing element 102 is constricted by the gas barrier layer 104 via the resin mold section 109. At the other end 106 of the protective pipe 101 into which the wiring 103 is inserted, the wiring 103 is fixed by a thermal contraction tube 110.

For example, the protective pipe 101 only needs to be made of a tetrafluoroethylene-perfluoroalkoxyethylene copolymer resin (PFA) or a tetrafluoroethylene-hexafluoropropylene copolymer resin (FEP). For example, the protective pipe 101 only needs to have an outer diameter of approximately 4 mm, an inner diameter of approximately 3 mm, and a length of approximately 1000 mm. For example, a NAFLON® PFA-HG tube manufactured by NICHIAS Corporation may be used.

In addition, the gas barrier layer 104 only needs to be made of polyvinylidene difluoride (PVDF). PVDF has a gas permeability coefficient 100 times or more smaller than PFA or FEP (see NPLs 1 and 2). When the gas barrier layer 104 is formed by a thermal contraction PVDF tube, if the temperature sensing element 102 and the wiring 103 are housed in the gas barrier layer 104 and then heated, the gas barrier layer 104 shrinks and binds (constricts) the housed temperature sensing element 102 and wiring 103 to put them in an integrated state. Preferably, one end of the tubular structure is closed. For example, the tubular structure may be formed by KYNAR® manufactured by ARKEMA Inc. When the gas barrier layer 104 has a thickness of approximately 0.25 mm, the entrance of gas can be restricted sufficiently.

Since the embodiment has the gas barrier layer 104, it is possible to prevent gas from entering the temperature sensing element 102 and the wiring 103 from the outside. Accordingly, the temperature sensor according to the embodiment can prevent corrosive gas from entering the temperature sensing element 102 and the wiring 103 without increasing the thickness of the protective pipe 101 even in a corrosive atmosphere. As a result, a failure in a corrosive environment can be suppressed without reduction in a response of the temperature sensor to temperature changes.

In addition, since the embodiment has the resin mold section 109, it is also possible to prevent gas from entering the temperature sensing element 102, the terminal sections 107, and the electric connection section 108.

Since the temperature sensing element 102 and the wiring 103 are constricted and integrated by the tubular gas barrier layer 104 in the embodiment, the temperature sensor can be assembled easily. When the temperature sensor is assembled, the temperature sensing element 102 to which the wiring 103 has been connected is inserted into the other end 106 of the protective pipe 101. At this time, if the temperature sensing element 102 is integrated with the wiring 103 by constricting them by the gas barrier layer 104, the temperature sensing element 102 and the wiring 103 can be smoothly inserted without deviation until they reach the end of the protective pipe 101, as compared with the case in which they are inserted into the protective pipe 101 individually. For example, even when the length of the protective pipe 101 is 100 times or more larger than its diameter, the temperature sensing element 102 and the wiring 103 can be inserted with no difficulty as long as they are fixed in the gas barrier layer 104 as described above.

In a state in which the temperature sensing element 102, the wiring 103, and the like are movable in the gas barrier layer 104, the length of the protective pipe 101 is preferably approximately 25 times larger than its diameter. In such a state, even when the temperature sensing element 102 and the wiring 103 are not fixed in the gas barrier layer 104, they can be inserted into the protective pipe 101 with trivial difficulty.

As described above, since the temperature sensor according to the invention is provided with the gas barrier layer, disposed between the temperature sensing element and the protective pipe and between the wiring and the protective pipe, that covers the temperature sensing element and the wiring in the protective pipe, a failure in a corrosive environment can be suppressed without reduction in a response of the temperature sensor to temperature changes and providing difficulty in installation of the temperature sensor.

The invention is not limited to the above embodiment and it will be appreciated that those skilled in the art can perform many modifications and combinations within the technical spirit of the invention.

### Reference Signs List

- 101:: protective pipe
- 102:: temperature sensing element
- 103:: wiring
- 104:: gas barrier layer
- 105:: housing section
- 106:: other end
- 107:: terminal section
- 108:: electric connection section
- 109:: resin mold section
- 110:: thermal contraction tube

## Claims

1. A temperature sensor comprising:
a protective pipe (101) having one end provided with a housing section (105), the protective pipe (101) being made of a fluororesin;
a temperature sensing element (102) housed in the housing section (105) of the protective pipe (101);
a wiring (103) connected to the temperature sensing element (102), the wiring (103) being drawn from the other end (106) of the protective pipe (101);
a gas barrier layer (104) disposed between the temperature sensing element (102) and the protective pipe (101) and between the wiring (103) and the protective pipe (101), the gas barrier layer (104) covering the temperature sensing element (102) and the wiring (103) in the protective pipe (101);
wherein the gas barrier layer (104) is made of a material having a gas permeability lower than that of a material of the protective pipe (101).

2. The temperature sensor according to claim 1, further comprising:
a resin mold section (109) covering the temperature sensing element (102), a terminal section (107) of the temperature sensing element (102), and an electric connection section (108) between the terminal section (107) and the wiring (103), the resin mold section (109) being made of a fluororesin,
wherein the gas barrier layer (104) is formed so as to cover the resin mold section (109).

3. The temperature sensor according to claim 1 or 2,
wherein the temperature sensing element (102) and the wiring (103) are constricted by the gas barrier layer (104) in a tubular shape.

4. The temperature sensor according to any one of claims 1 to 3,
wherein the protective pipe (101) is made of a tetrafluoroethylene-perfluoroalkoxyethylene copolymer resin or a tetrafluoroethylene-hexafluoropropylene copolymer resin and the gas barrier layer (104) is made of polyvinylidene fluoride.
